# EUROPEAN PATENT SPECIFICATION

(11) **EP 1 575 223 B1**
(45) Date of publication and mention of the grant of the patent: **03.01.2007**
(21) Application number: 04425166.8
(22) Date of filing: 12.03.2004
(51) Int. Cl.: H04L 12/56

(54) **Method to establish a connection between two AAL2 signalling endpoints inside a communication network**
Verfahren zum Aufbau einer Verbindung zwischen zwei ALL2-Endpunkten in einem Kommunikationsnetzwerk
Procédé pour établir une connexion entre deux terminaisons AAL-2 dans un réseau de communication

(43) Date of publication of application: 14.09.2005
(73) Proprietor: Siemens S.p.A., 20126 Milano (IT)
(72) Inventor: Fumagalli, Sergio, 20069 Vaprio D'Adda (IT); Morini, Massimiliano, 27040 Castelleto (IT); Laia, Roberto, 20052 Monza (MI) (IT)

(56) References cited:
- WO-A-02/056550
- US-B1- 6 493 344

## Description

### FIELD OF THE INVENTION

The present invention relates to the field of communications networks embodying ATM (Asynchronous Transfer Mode) technology and more precisely to a method to establish a connection between two AAL2 signalling endpoints inside a communications networks. Without limitation, the considered network is the UMTS (Universal Mobile Telecommunication System) one.

### BACKGROUND TO THE INVENTION

The operation of whatever communications networks avails of a complex signalling constituted by coordinate protocols to control and synchronize the information exchange across the interfaces between the various network elements. Only in this way payloads can be correctly routed through the network and delivered to destination. The problem of maintaining the compatibility of operation among systems and apparatuses of the various vendors, pressed the CCITT (Comité Consultatif International Télégraphique et Téléphonique) since long time ago to define an abstract model named: Open System Interconnection (OSI) Reference Model for CCITT Applications (Rec. X.200). According to the OSI paradigm, whatever telecommunication system can be described by a set of sub-systems placed within a vertical sequence (stack). A sub-system N, that consists of one or more layer entities N, interacts only with the sub-systems placed above and beneath. A layer entity N performs functions within the layer N it belongs to. For the communication among N entities of equal layer (peer entities) a protocol called peer-to-peer is used. The information unit that is exchanged through a peer-to-peer protocol is called N-PDU (N-Protocol Data Unit), it includes data and a control information N-PCI (N-Protocol Control Information). Entities of equal layer N communicate between them using the services supplied by the layer underneath. Likewise, the services of the layer N are fed to layer N+1 at an access point called N-SAP (N-Service Access Point). For the description of the interface between adjacent layers N and N+1, level N primitives are introduced. A level N primitive together with an associated data service unit N-SDU (N-Service Data Unit) are sent by the layer N to layer N+1, and vice versa, using to this purpose a level N service protocol. The primitives and the SDU units therefore enable the bi-directionality of the information flow along a stack.

Historically, the problem of designing an OSI compatible and reliable signalling system had been posed in the field of the Public Switched Telephone Networks (PSTN). For this aim a CCITT Signalling System N° 7, largely compatible with the OSI model, has been developed to provide an internationally standardised general purpose Common Channel Signalling (CCS) system. Relevant SS7 standards are published, and regularly updated, as ITU-T (International Telecommunication Union) Q.7xx Recommendations. Together with the old Message Transfer Part (MTP3) and the User Part, the SS7 signalling has been gradually enriched with new functions suitable for the incoming digital PLMNs, the Intelligent Networks, and the Packet Switch service. To support PLMNs a Mobile Application Part (MAP) has been developed by ETSI (TS 29.002), now 3GPP. The CCS is a signalling method in which a single channel conveys, by means of labelled messages, signalling information relating to, for example, a multiplicity of circuits, or network management. A telecommunication network served by a common channel signalling is composed of a number of switching and processing nodes interconnected by transmission links. A number of parallel signalling links constitute a link-set. The combination of signalling points and their interconnecting signalling links form the SS7 signalling network. In some specific cases a given physical node may be defined as more than one signalling points. All signalling points in a SS7 network are identified by a unique code known as a Point Code. The term "signalling mode" refers to the association between the path taken by a signalling message and the signalling relation to which the message refers, where "signalling relation" means that for the signalling points which are the origin and the destination of the message the possibility exists of communicating between their corresponding User Part function. The SS7 system is specified for use in the associated and quasi-associated modes. In the associated mode of signalling the messages relating to a particular signalling relation between two adjacent points are conveyed over a link-set directly interconnecting those signalling points. A signalling point at which a message is generated is the originating point of the message and the relative Point Code is an Originating Point Code (OPC). A signalling point to which a message is destined is the destination point of the message and the relative Point Code is a Destination Point Code (DPC). A signalling point at which a message is received on one signalling link and is transferred to another link is a Signal Transfer Point (STP) addressed by its relevant Point Code. A pre-determined path that a message takes through the various signalling points is the signalling route for that signalling relation. Address message is used to route the call to the appropriate called destination. A signalling message is an assembly of information, defined at level 3 or 4, pertaining to various signalling tasks, that is transferred as an entity by the message transfer function. Each message contains *service information* and *signalling information,* packed up into Message Signal Units (MSUs) which also includes control information related to the level 2 functions of the signalling link conveying the message. The *signalling information* of the message include the actual user information, such as one or more telephone or data call control signals, management and maintenance information, etc., and information identifying the type and format of the message. The *signalling information* of the message contains a standard label enabling the message to be routed towards its destination and then directed to the particular circuit, call, management or other transaction to which the message is related at the receiving User Part. In the standard Label the portion that is used for routing is called the *Routing Label,* it includes the OPC (14 bits), the DPC (14 bits), and a Signalling Link Selection (SLS) field (4 bits) used for load sharing. The standard routing label assumes that each signalling point in a signalling network is allocated a code according to a code plan that is unambiguous within is domain, either international or national in accordance with the Network Indicator (NI) code of the SIO field.
The signalling concepts introduced above find application in all communications networks, in particular the Broadband Integrated Service Digital Networks (B-ISDN) based on ATM technology. Recent 3^{rd} generation PLMNs (Public Land Mobile Network) are characterized by a noticeable increase of the transmission bandwidth with respect to the 2^{rd} generation ones, so that they are naturally tending towards the performances of a B-ISDN and due to increased throughput new real-time services are possible. In 3GPP UMTS Systems, the underlying transport provided for the radio specific protocols is ATM. According to the ATM concept, all data streams with different bit-rates will be converted into small data packets, the so-called ATM cells, 53 bytes long, transmitted via the same digital path. Asynchronous Transmission Mode means that in a stream of continuously transmitted ATM cells the temporary distances between consecutive useful cells may be different. The first 5 consecutive bytes of each ATM cell constitute an Header for conveying the ATM-cell control information, the remaining 48 bytes being used for the Payload. The ATM Adaptation Layer (AAL) performs functions required by the user, control and management planes and supports the mapping between the ATM layer and the next higher layer. AAL is functional divided into two sub-layers: the Convergence Sub-layer (CS) and the Segmentation And Re-assembly (SAR) sub-layer. The CS is responsible for adaptation of the ATM to upper layer and the recognition of the data type and synchronisation. The SAR is responsible for segmentation of the data flow into the 48 bytes ATM payload parts and the re-assembly of the ATM payload to the original data flow. The functions performed in the AAL depend upon the higher layer requirements. In short, the AAL supports all of the functions required to map information between the ATM network, and the non-ATM application that may be using it. Different adaptation layers exist to carry traffic as diverse as packet-based or isochronous (T1 or E1) over the ATM backbone. AALs are standardized in the ITU-T 1.363.x series of Recommendations. The most commonly implemented are AAL1 (1.363.1), which supports isochronous transmission (circuit emulation, for example), AAL2 (I.363.2), which supports carrying of service data units with a variable source bit-rate and AAL5 (1.363.5), which supports carrying packet data. AAL2 and AAL5 are the standardized ATM adaptation layers specified for use in the UTRAN (UMTS Terrestrial Radio Access Network) and in particular AAL2 connections are used on the lu-CS, lur and lub interfaces for transport of UMTS user data. AAL2 provides the capability to multiplex application packets from different user connections over the same ATM connection identified by VPI (Virtual Path Identifier) and VCI (Virtual Channel Identifier). The AAL2 effectively forms a new switching layer within the ATM network architecture. In order to package information into ATM cell, AAL2 performs a two-step operation. For this, it defines two CPS (Common Part Sublayer) packet formats, CPS-packet and CPS-PDU. The CPS-packet is a data-unit used to carry payload for one of the many instances that AAL2 supports. To identify the given instance, an identifier called CID (Channel Identifier) is used: this identifies an AAL2 channel (i.e., one of the application entities running over AAL2). The AAL2 channel is a bidirectional medium so the same value of CID is used in both the directions. AAL2 channels are established over an ATM layer Permanent Virtual Circuit (PVC), Soft Permanent Virtual Circuit (SPVC) or Switched Virtual Circuit (SVC).The standardized way to establish AAL2 ATM Channels (referred also to as AAL2 channels or AAL2 connections) is through the use of the AAL2 Type 2 Signalling Protocol ALCAP (Access Link Control Application Part, ITU-T Q.2630.1). Signalling is used between the user and the network, or between two Network Elements (NE) to establish, monitor, and release connections by exchanging control information. In the context of AAL2, the AAL2 signalling protocol encompasses the control plane functions to establish, clear and maintain AAL2 connections (an AAL2 connection can be viewed as the logical concatenation of one or more AAL2 links between two AAL2 service end-points). A prior art signalling AALZ protocol can be found in WO 02/056550 A.

### OUTLINED TECHNICAL PROBLEM

ITU-T Recommendation Q.2630.1 describes an AAL type 2 signalling protocol which provides the signalling capability to establish, release and maintain AAL2 point-to-point connections across a series of ATM VCs that carry AAL2 links. These services are accessible via the AAL type 2 served user service access point (A2SU-SAP).

During a connection set up, due to a software (SW) error in one end-point, could happen that one AAL2 channel is not correctly released, so the same channel could considered busy in one end-point and free in the peer end-point. This misalignment may cause the systematic failure of AAL2 resources allocation for the subsequent connection attempts. In the following, the busy channel that is considered free in the peer end-point will be also referred as: Hanging CID, Hanging Channel or Hanging Resource. In case of frequent SW error during the AAL2 connection release procedure, the number of unavailable resources increases so the number of connection setup failure increases as well if the invention is not used. The problem of hanging resources is critical in case the CID allocation strategy of the originating endpoint is to allocate the last used (or released) resource. In this case the originating AAL2 endpoint tries to use always the same resource that is considered busy in the destination AAL2 endpoint due to the misaligned status between the two endpoints. Misalignment means that the target endpoint status of these resources is 'busy' but in the originating AAL2 endpoint the same resources are in 'idle' state. This particular case may cause the unsuccessful connection setup for all the attempts, so the AAL2 link is completely unavailable.

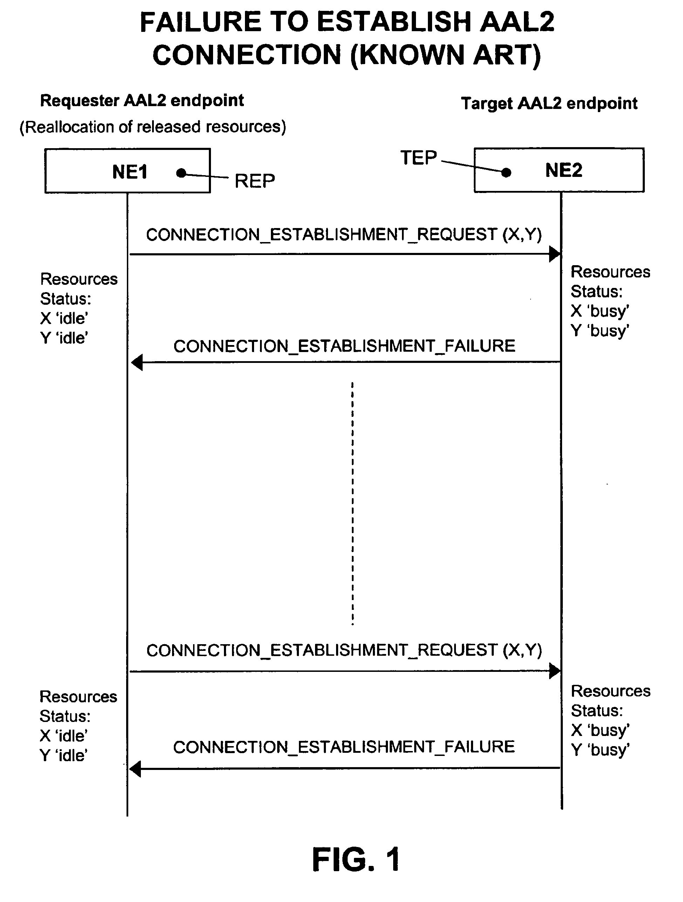

A message sequence chart which highlights the failure to establish one AAL2 connection is depicted in **fig.1.** In this introductive part of the description in order to be as general as possible, the names of the messages are not corresponding to the standard ones. With reference to **fig.1**, an originating AAL2 endpoint REP inside a first network element NE1 has the necessity to establish an AAL type 2 link with a destination (target) AAL2 endpoint TEP inside another network element NE2. For connection establishment aim, the originating endpoint REP sends to the destination endpoint TEP a CONNECTION_ESTABLISHMENT_REQUEST message with the indication of the needed resources to be allocated inside network element NE2. The corresponding resource indicators are conventionally named X and Y. The indicated resources may corresponds to a channel with given bandwidth identified by VPI, VCI and CID. These resources are considered available inside NE1, for example because they are just released, and the relevant status is indicated as 'idle' consequently. The originating endpoint REP reasonably assumes that the same idle state is considered by the Target endpoint TEP. Nevertheless, due to internal error or other causes of misalignment, the status of the resources X and Y might be considered "busy" by the destination endpoint TEP, so it sends back a CONNECTION_ESTABLISHMENT_FAILURE message to the originating endpoint REP. At the reception of this message the originating endpoint REP re-attempts to establish the AAL2 connection, but every successive attempt to allocate the "hanged" resources fails. With that no resources establishment is possible for that CID.

As a consequence of the hanged resources the overall data throughput between the two network elements NE1, NE2, either for control or user information, is reduced cause the impossibility of using resources really free but considered busy, so that other resources considered idle by both the endpoints may be allocated for the AAL2 SAPs to another CID and the advantages due to ATM are partially lost.

### OBJECTS OF THE INVENTION

The main object of the present invention is that to overcome the drawbacks of the prior art in presence of misaligned status of the resources between two AAL2 endpoints when a new connection is attempted, and indicate a connection establishment method able to prevent the reduction of the overall data throughput.

### SUMMARY AND ADVANTAGES OF THE INVENTION

The invention achieves said object by providing a method to establish a connection between two AAL2 signalling endpoints in a communications network, as disclosed in the claims.

According to the method of the invention, when an originating AAL2 endpoint requests the establishment of a new connection to a destination AAL2 endpoint, specifying the needed resources to be allocated, and the destination endpoint answers with a reject due to the busy state of the requested resources, the originating endpoint firstly recognises the misalignment status of the resources and then starts a procedure to resume the correct status, namely the same status of the resources stated by the originating AAL2 endpoint, so that a bidirectional link can be established between the two endpoints.

The advantage of the method of the invention is that to correct the asymmetrical status of the resources at the two ends of the ATM link for preventing the total unavailability and consequent reduction of the overall throughput. The invention is useful for every AAL2 Nodes and in particular, referring to UTRAN, it can be applied over the lu-(CS) interface (the RNC is the originating AAL2 endpoint and the UMSC is the destination AAL2 endpoint), over lub interface (the RNC is the originating AAL2 endpoint and the Node B is the destination AAL2 endpoint), and over lur interface between two RNCs that can act as originating and destination AAL2 endpoint.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1**, already described, shows a case of failure to establish AAL2 connection according to the known methods;
- **fig.2** shows an example of UMTS network Service Area;
- **fig.3** shows a functional block representation of the UMTS system;
- **fig.4** shows the general protocol model of the UTRAN specification;
- **fig.5** shows the correct establishment of AAL2 connection on the lur link inside UTRAN according to the method of the present invention;
- **fig.6** shows a generalization of the method of the preceding figure.

### DETAILED DESCRIPTION OF AN EMBODIMENT OF THE INVENTION

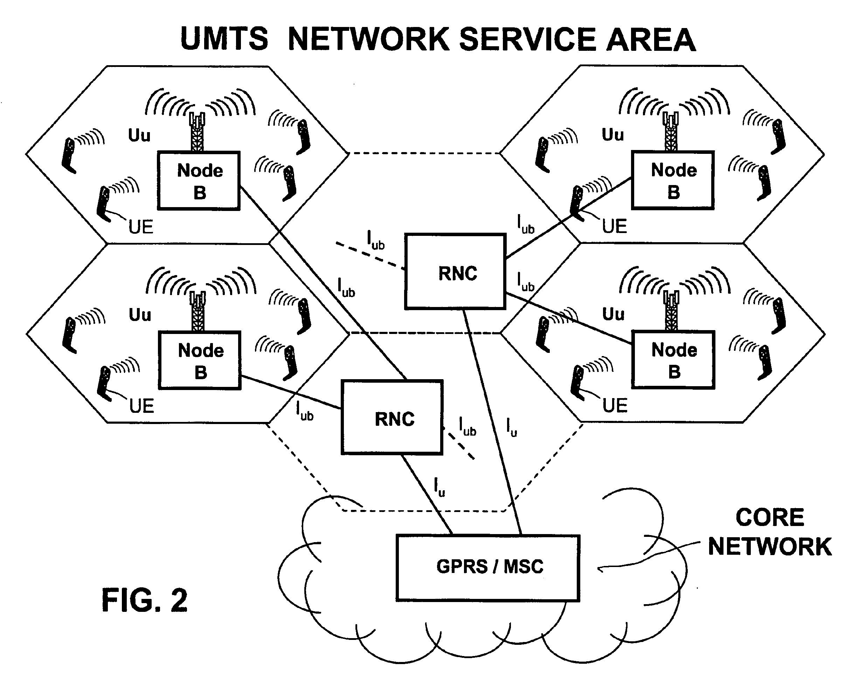

With reference to **fig.2** we see a partial UMTS network deployed on a territory subdivided into contiguous service cells, each corresponding to the radio coverage area of a fixed base station, conventionally named Node B, placed at the centre. Each Node B is connected via radio with a plurality of mobile stations, also termed User Equipment (UE). A cluster of contiguous fixed base stations is physically connected to a Radio Network Controller (RNC), in its turn connected to the Core Network CN. The latter is schematically represented by a block SGSN / MSC (Serving GPRS Support Node /Message Switching Centre) for indicating either packet switching or circuit switching capability. The Core Network CN is shared between UMTS and the existing GSM (Global System for Mobile communications). The following interfaces are defined: an lu interface between the core network and the RNCs; an lub interface between the RNC and the Nodes B; and an Uu on-air interface between the Node B and the UEs. The UMTS network is subdivided into contiguous service areas, each including several cells. The mobile terminal in idle state is traceable into a service area by paging messages. The 3GPP (3rd Generation Partnership Project) in the ambit of the ITU-T has issued a complete set of Technical Specifications (TS) for the standardisation of the UMTS network.

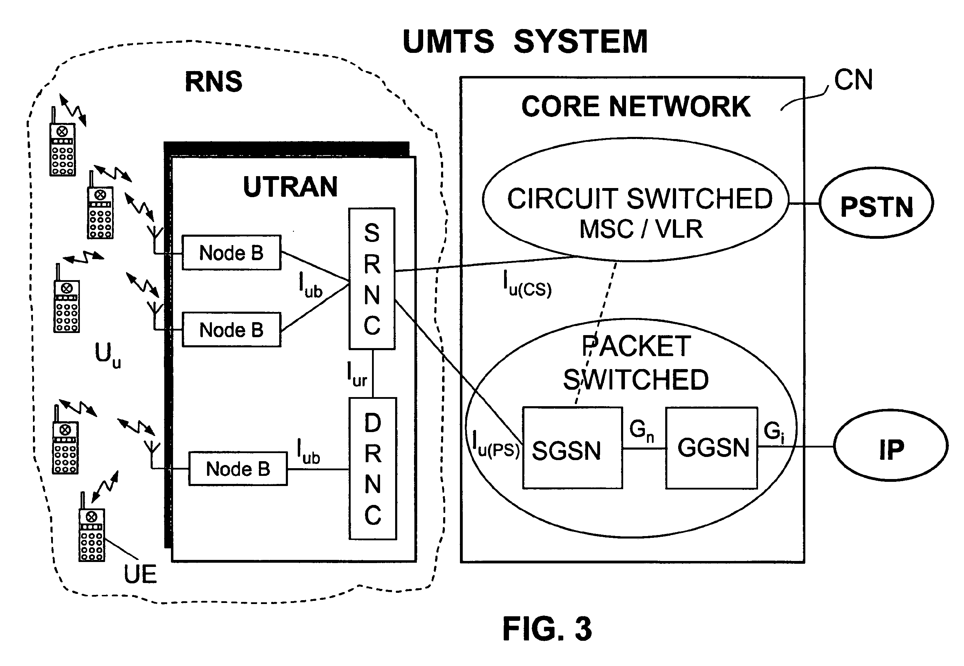

With reference to **fig.3**, the UMTS system includes the Core Network CN, (see TS 23.002) connected to the mobile UEs through the interposed UTRAN (see TS 25.401). UTRAN includes a plurality of Node B blocks and the respective RNC controllers, and all the involved interfaces. Each UE includes a Mobile Equipment ME with a respective USIM card (UMTS Subscriber Identity Module). Inside the UTRAN the upper RNC is a SRNC (Serving RNC) connected to the Core Network CN by means of a first lu(CS) Circuits Switched (CS) interface and a second lu(PS) Packet Switched (PS) interface. The RNC placed below is a DRNC (Drift RNC) connected to the SRNC by means of an internal lur interface. Each RNC controlling cells is named CRNC and is interfaced to the other type of RNCs through the lur interface. The UTRAN and the served UEs constitute a Radio Network Subsystem (RNS) disclosed in TS 23.110. The core network CN includes a CIRCUIT SWITCHED part and a PACKET SWITCHED part. The first one is connected to the PSTN (Public Switched Telephone Network) while the second one is connected to the IP (Internet Protocol) network. The circuit switched part includes the MSC / VLR (Visitor Location Register) network elements which together allow the wandering of users inside the network. The PACKET SWITCHED part packet switched part includes two network elements known as SGSN (Serving GPRS Support Node) and GGSN (Gateway GPRS Support Node). The first one is interfaced to the MSC / VLR and to the HLR (Home Location Register) to catch location information of the UEs in the packet switched domain. The SRNC is interfaced to the MSC/VLR block through the lu(CS) interface and to the SGSN node through the lu(PS) interface. The SGSN node is further interfaced to the GGSN node through the Gn interface. The GGSN node is further interfaced to the IP network through the Gi interface.

As the operation is concerned, on the Uu radio interface the transmissions are based on the CDMA technique. The CDMA technique implies that multiple signals can be transmitted in the same time interval and in the same frequency band, but separated in the code domain. Depending on the adopted standard, the CDMA transmissions can be further based on TDMA (Time Division Multiple Access) technique. The TDMA technique implies that each frame is subdivided in a fixed number of timeslots, each of them conveys one or more CDMA bursts, and different timeslots of the frame can be assigned to different users or alternatively to pilots or signalling channels. Still depending on the adopted standard, either Frequency Division Duplexing (FDD) or Time Division Duplexing (TDD) are possible. Non-limiting 3GPP system suitable to accommodate the invention are the following: WCDMA UTRA-FDD 3.84 Mcps (Mega chips); 3GPP UTRA-TDD 3.84 Mcps; 3GPP UTRA-TDD 1.28 Mcps; and TD-SCDMA ((Time Division ― Synchronous CDMA) 1.28 Mcps standardised by CWTS (Chinese Wireless Telecommunication Standards) committee.

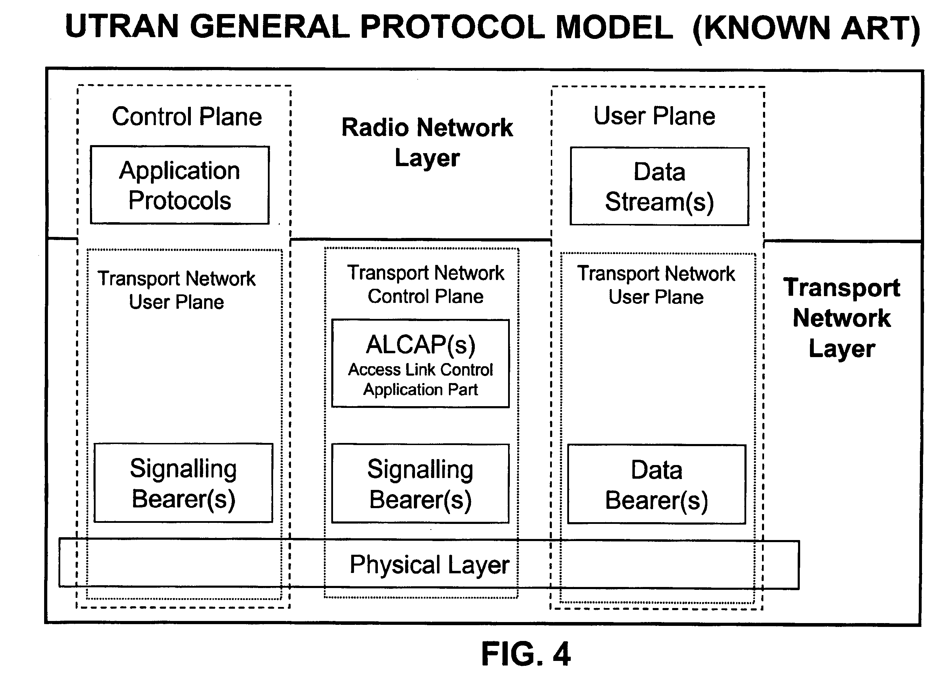

**Fig.4** shows a general protocol model of the UTRAN interface highlighting a subdivision into an User Plane and a Control Plane. The protocol structure is designed in horizontal layers and vertical planes, according to the current standardisation. Layers and Planes are taken as logically independent of each other to allow future changes, if necessary, of the only involved parts. Two main horizontal layers are present: an upper Radio Network Layer and a lower Transport Network Layer, the latter including Physical Layer. Three vertical planes are present, respectively: a Control Plane, an User Plane, and a Transport Network Control Plane. The User Plane includes Data Stream(s) and data Bearer(s) for Data Stream(s). Each data stream is characterised by one or more frame protocols specified for that interfaces. The User Plane is used to transport all user data, e.g.: speech data or packet data. The Control Plane is used for all control signalling which is UMTS-specific in the considered case. It includes (depending on the relevant interface) several Application Protocols, i.e. RANAP (Radio Access Network Application Part described in the TS 25.413; RNSAP (Radio Network Subsystem Application Part) described in the TS 25.423; and NBAP (Node B Application Part) described in the TS 25.433; the Control Plane also includes the Signalling Bearer(s) to transport the Application Protocols messages. The Transport Network Control Plane acts as plane between the Control Plane and the User Plane. It enables the Application Protocols in the Control Plane to be total independent of the technology selected for data bearer in the User Plane. The Transport Network Control Plane is based on the ALCAP (Access Link Control Application Part) concept described in TS 25.410, TS 25.420 & TS 45.430. The ALCAP is a set of protocols (ITU Q2630.1 and Q2150.1) used to set up Data Bearer(s) for the User Plane. The Layer 1 of the lu, lur and lub interfaces is defined identically in the TS 25.411, TS 25.421 and TS 25.431. Main L1 functions are those to interface to the physical medium (e.g.: optical fibre, radio link, copper cable) to offer the clock extraction capability and transmission quality control. The physical medium shall comply with some well known standards, i.e. SDH, SONET, Ex, Tx, etc. In the UMTS network of **fig.3** ATM is used on Layer 2 of the whole Transport Network Layer; to say, for all 3 Planes of the lu (TS 25.412), lur (TS 25.422) and lub (TS 25.432) interfaces.

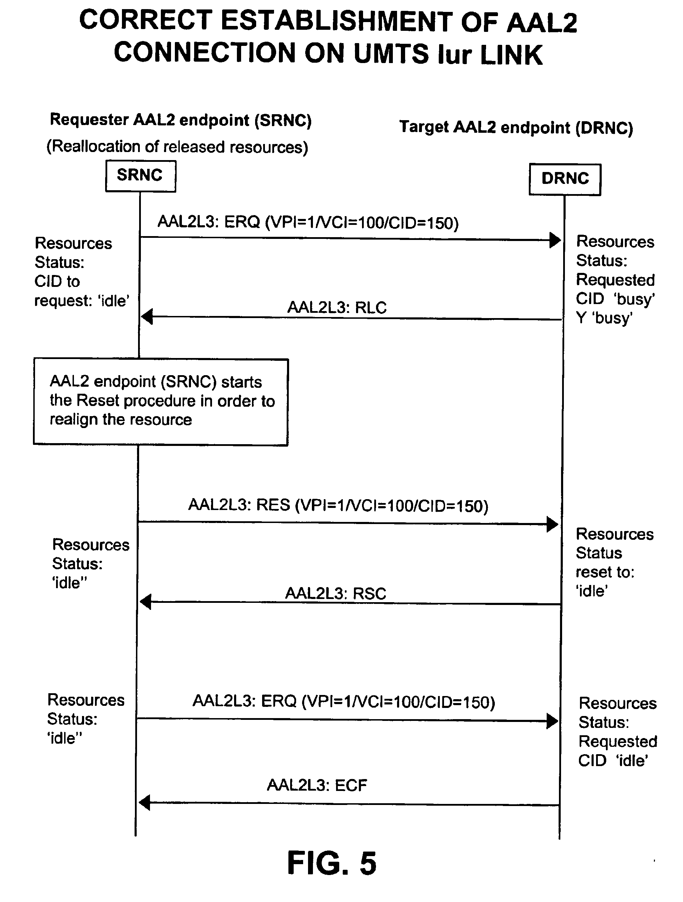

In **fig.5** a message sequence chart is represented which highlights a method according to the present invention to establish one AAL2 connection on the lur link between the SRNC and DRNC network elements inside UTRAN (fig.3). With reference to **fig.5**, to setup a connection the originating AAL2 endpoint SRNC sends to the destination AAL2 endpoint DRNC the ALCAP ERQ (Establish Request) message requesting to use a resource (a channel identified by VPI, VCI and CID). If the originating AAL2 endpoint receives from the destination AAL2 endpoint the ALCAP RLC (Release Confirm) message instead of the ECF (Establish Confirm) message it considers the requested resource as unavailable (Hanging resource) and sends to the destination AAL2 endpoint a RES (Reset) message in order to force the destination AAL2 endpoint to release the relevant resource. Once the resource is released (put in idle state) the destination AAL2 endpoint sends to the originating AAL2 endpoint a RSC (Reset Confirm) confirmation message. Upon the reception of the RSC message the latter endpoint may repeats the sending of the ERQ (Establish Request) message requesting to use the released resource. The destination AAL2 endpoint allocates the resource to the lur link (whether not yet allocated) and sends back to the originating AAL2 endpoint the ECF (Establish Confirm) message. At this point the originating AAL2 endpoint considers the connection successfully established and the signalling procedure is completed.

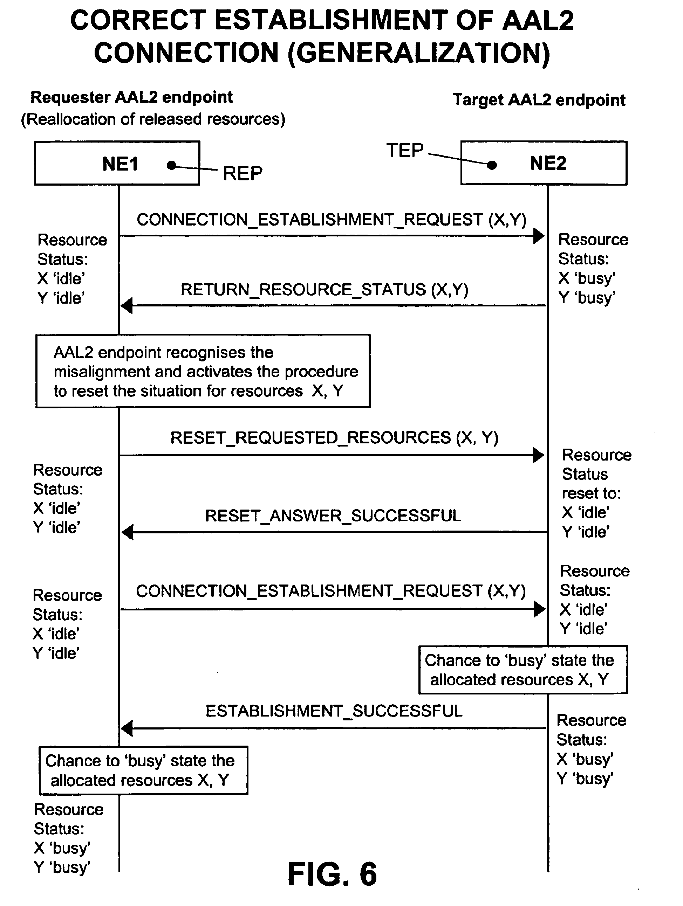

In **fig.6** the names and types of messages are considered in more general form not strictly tied to the ALCAP rules neither to the UMTS case, differently from the ones indicated in **fig.5.** With reference to **fig.6,** and considering in idle state the X, Y resources destined to the AAL2 connection, the destination endpoint TEP replies to the resource request message with a message RETURN_RESOURCE_STATUS (X,Y) embedding a state indicator field of the pair resources X, Y. The originating endpoint REP, upon the reception of this message, is able to recognise a misalignment from the comparison between the received state and the known one. More precisely, the only misalignment having interest to the prosecution of the method corresponds to the return of a 'busy' indication from TEP (the return of 'idle' indication is handled with usual connection procedure). Once the misalignment is detected, the originating endpoint REP send to the destination endpoint TEP a reset message RESET_REQUESTED_RESOURCES forcing the latter to change from "busy" to "idle" the state of the resources X and Y inside the element NE2. Once the status realignment has been completed, the destination endpoint TEP sends back a confirmation message RESET_ANSWER_SUCCESSFUL to the originating endpoint REP. The latter, upon the reception of the confirmation retransmits the CONNECTION_ESTABLISHMENT_REQUEST message. Being the status of X, Y considered equally idle by the two AAL2 endpoints, the destination endpoint TEP turns the state of the idle resources to busy and assigns them to the AAL2 link (whether not yet assigned); then it sends back a CONNECTION_ESTABLISHMENT_SUCCESSFUL confirmation message to the originating endpoint REP. The latter, at the reception of this message turns from idle to busy the state of the resources X, Y in order to preserve the alignment. From this time onwards the AAL2 service can be delivered on the AAL2 connection established on the ATM link.

Before the description is completed some clarifications on the possible configurations assumed by AAL2 endpoints and network elements NEs are useful. Some network elements can act as originating and destination AAL2 endpoints, but for different AAL2 connections established on the same ATM link. The single connection shall have its originating endpoint associated to a NE and its destination endpoint associated to a different NE. Other connections which share the same ATM link may have inverted the originating and terminating endpoints with respect to the two NEs. Translating these considerations on **fig.6**, this means to have to foresee another configuration with NE1 associated to the destination endpoint TEP and NE2 associated to the originating endpoint REP. With reference to **fig.3**, the SRNC and DRNC are an example of network elements which may act as originating and destination AAL2 endpoints, this because on the lur interface connections can be requested and released for the two directions of transmission. Hence, on the lur interface one RNC can request connections to the other and receive back requests. The same is not true, for example, on the lub and lu(CS) interfaces where is the only RNC which requests connections to the other endpoint but never receives back requests.

## Claims

1. Method to establish an Asynchronous Transfer Mode Adaptation Layer type 2, or AAL2, connection between two AAL2 signalling endpoints (REP, TEP) associated to respective network elements (NE1, NE2) of a communications network for the aim of conveying on said connection user traffic and network signalling, the method including:
- sending a first request message from an originating signalling endpoint (REP) to a destination signalling endpoint (TEP) for allocating peer resources to the terminating end of the connection;
- receiving back at the originating signalling endpoint (REP) a reply message from the destination signalling endpoint (TEP) giving implicit or explicit indication on either free or busy state of the requested resources;
**characterized in that**: further including:
- checking at the originating signalling endpoint (REP) the alignment between the received back status indication and the free state of the peer resources at the originating end of the connection;
- in case the misalignment is detected, sending a reset message from the originating signalling endpoint (REP) to the destination signalling endpoint (TEP) for turning the state of the requested resources from busy to free in order to make possible the establishment of the connection.

2. The method of claim 1, **characterized in that** said checking is performed by discriminating the reception of a reply message which confirms the release of the connection.

3. The method of claim 1, **characterized in that** said checking is performed by discriminating the busy state of the requested resources from a state indicator embedded in said reply message.

4. The method of any of the preceding claims, **characterized in that** the destination signalling endpoint (TEP) sends back to the originating signalling endpoint (REP) a message for confirming a successful reset step.

5. The method of the preceding claim, **characterized in that** the originating signalling endpoint (REP) at the reception of a confirmation of a successful reset transmits to the destination signalling endpoint (TEP) a second request message equal to the first one for allocating peer resources to the terminating end of the connection.

6. The method of the preceding claim, **characterized in that** the destination signalling endpoint (TEP) at the reception of the second request message turns to busy the state of the peer resources at the terminating end of the connection and allocates them to the connection, in case they are not yet allocated.

7. The method of the preceding claim, **characterized in that** the destination signalling endpoint (TEP) transmits to the originating signalling endpoint (REP) a confirmation message on the successful assignment of the peer resources to the terminating end of the connection.

8. The method of the preceding claim, **characterized in that** the originating signalling endpoint (REP) at the reception of the last confirmation message turns to busy the state of the peer resources at the originating end of the connection.

9. The method of any preceding claims, **characterized in that** a peer resource requested for allocation includes a channel identified by VPI, VCI and CID.

10. The method of any preceding claims, **characterized in that** said ATM connection is established on the interfaces (lub, lur, lu(CS), lu(PS)) of a radio access network (UTRAN) of a third generation mobile radio system (UMTS).

## Patentansprüche

1. Verfahren zum Aufbau einer Verbindung über die Asynchronous Transfer Mode Adaptation Layer des Typs 2 (Anpassungsschicht Typ 2 des asynchronen Übertragungs-Modus), oder AAL2-Verbindung, zwischen zwei AAL2-Signalisierungs-Endpunkten (REP, TEP), die jeweiligen Netzwerkelementen (NE1, NE2) eines Kommunikationsnetzwerks zugeordnet sind, zum Zweck des Transportierens von Benutzerverkehr und Netzwerksignalisierung der besagten Verbindung, wobei das Verfahren Folgendes umfasst:
- Senden einer ersten Verbindungsanforderungsnachricht von einem ausgangsseitigen Signalisierungs-Endpunkt (REP) an einen zielseitigen Signalisierungs-Endpunkt (TEP) zwecks Zuteilung von Peer-Ressourcen an dem zielseitigen Ende der Verbindung;
- an dem ausgangsseitigen Signalisierungs-Endpunkt (REP) Empfangen einer Antwortnachricht von dem zielseitigen Signalisierungs-Endpunkt (TEP), welche implizit oder explizit den Status "frei" oder "belegt" der angeforderten Ressourcen angibt;
**dadurch gekennzeichnet, dass**: das Verfahren ferner Folgendes umfasst:
- an dem ausgangsseitigen Signalisierungs-Endpunkt (REP) Prüfen der Synchronisation zwischen der empfangenen Statusinformation und dem Status "frei" der Peer-Ressourcen am ausgangsseitigen Ende der Verbindung;
- im Fall, dass eine Fehlsynchronisation erkannt wird, Senden einer Rücksetz-Nachricht von dem ausgangsseitigen Signalisierungs-Endpunkt (REP) an den zielseitigen Signalisierungs-Endpunkt (TEP), um den Status der angeforderten Ressourcen von "belegt" in "frei" zu ändern, um so die Herstellung der Verbindung zu ermöglichen.

2. Verfahren gemäß Anspruch 1, **dadurch gekennzeichnet, dass** das besagte Prüfen erfolgt, indem der Empfang einer Antwortnachricht erkannt wird, welche die Auslösung der Verbindung bestätigt.

3. Verfahren gemäß Anspruch 1, **dadurch gekennzeichnet, dass** das besagte Prüfen erfolgt, indem der Status "belegt" der angeforderten Ressourcen anhand eines Status-Indikators erkannt wird, der in die besagte Antwortnachricht eingebettet ist.

4. Verfahren gemäß einem der vorstehenden Ansprüche, **dadurch gekennzeichnet, dass** der zielseitige Signalisierungs-Endpunkt (TEP) an den ausgangsseitigen Signalisierungs-Endpunkt (REP) eine Nachricht zurücksendet, die einen erfolgreichen Rücksetz-Schritt bestätigt.

5. Verfahren gemäß dem vorstehenden Anspruch, **dadurch gekennzeichnet, dass** der ausgangsseitige Signalisierungs-Endpunkt (REP) nach Empfang einer Bestätigung einer erfolgreichen Rücksetzung an den zielseitigen Signalisierungs-Endpunkt (TEP) eine zweite, mit der ersten identische Verbindungsanforderungsnachricht sendet, um am zielseitigen Ende der Verbindung Peer-Ressourcen zuzuteilen.

6. Verfahren gemäß dem vorstehenden Anspruch, **dadurch gekennzeichnet, dass** der zielseitige Signalisierungs-Endpunkt (TEP) bei Empfang der zweiten Verbindungsanforderungsnachricht den Status der Peer-Ressourcen am zielseitigen Ende der Verbindung in "belegt" ändert und diese der Verbindung zuteilt, falls sie noch nicht zugeteilt sind.

7. Verfahren gemäß dem vorstehenden Anspruch, **dadurch gekennzeichnet, dass** der zielseitige Signalisierungs-Endpunkt (TEP) an den ausgangsseitigen Signalisierungs-Endpunkt (REP) eine Bestätigungsnachricht über die erfolgreiche Zuweisung der Peer-Ressourcen zum zielseitigen Ende der Verbindung sendet.

8. Verfahren gemäß dem vorstehenden Anspruch, **dadurch gekennzeichnet, dass** der ausgangsseitige Signalisierungs-Endpunkt (REP) nach Empfang dieser letzten Bestätigungsnachricht den Status der Peer-Ressourcen am ausgangsseitigen Ende der Verbindung in "belegt" ändert.

9. Verfahren gemäß einem der vorstehenden Ansprüche, **dadurch gekennzeichnet, dass** eine zur Zuteilung angeforderte Peer-Ressource einen Kanal umfasst, welcher durch die Kennung des virtuellen Pfades VPI, die Kennung des virtuellen Kanals VCI und die Kanalkennung CID identifiziert ist.

10. Verfahren gemäß einem der vorstehenden Ansprüche, **dadurch gekennzeichnet, dass** die besagte ATM-Verbindung über die Schnittstellen (Iub, Iur, Iu(CS), Iu(PS)) eines Funkzugangsnetzwerks (UTRAN) eines Mobilfunksystems der dritten Generation (UMTS) hergestellt wird.

## Revendications

1. Procédé d'établissement d'une connexion de Couche d'Adaptation de type 2, ou AAL2, en Mode de Transfert Asynchrone, entre deux points d'extrémité de signalisation AAL2 (REP, TEP) associés à des éléments de réseau respectifs (NE1, NE2) d'un réseau de communications dans le but de transporter sur ladite connexion un trafic d'utilisateur et une signalisation de réseau, le procédé comprenant :
- envoyer un premier message de demande à partir d'un point d'extrémité de signalisation d'origine (REP) à un point d'extrémité de signalisation de destination (TEP) pour attribuer des ressources homologues à l'extrémité d'arrivée de la connexion;
- recevoir en retour au point d'extrémité de signalisation d'origine (REP) un message de réponse en provenance du point d'extrémité de signalisation de destination (TEP) donnant une indication implicite ou explicite concernant l'état libre ou occupé des ressources demandées;
**caractérisé en ce que** : il comprend en outre :
- vérifier au point d'extrémité de signalisation d'origine (REP) l'alignement entre l'indication d'état reçue en retour et l'état libre des ressources homologues à l'extrémité d'origine de la connexion;
- dans le cas où le désalignement est détecté, envoyer un message de réinitialisation du point d'extrémité de signalisation d'origine (REP) au point d'extrémité de signalisation de destination (TEP) pour passer l'état des ressources demandées de occupé à libre afin de permettre l'établissement de la connexion.

2. Procédé selon la revendication 1, **caractérisé en ce que** ladite vérification est exécutée en discriminant la réception d'un message de réponse qui confirme la libération de la connexion.

3. Procédé selon la revendication 1, **caractérisé en ce que** ladite vérification est exécutée en discriminant l'état occupé des ressources demandées à partir d'un indicateur d'état intégré dans ledit message de réponse.

4. Procédé selon l'une quelconque des revendications précédentes, **caractérisé en ce que** le point d'extrémité de signalisation de destination (TEP) envoie en retour au point d'extrémité de signalisation d'origine (REP) un message pour confirmer une étape de réinitialisation réussie.

5. Procédé selon la revendication précédente, **caractérisé en ce que** le point d'extrémité de signalisation d'origine (REP), à la réception d'une confirmation d'une réinitialisation réussie, transmet au point d'extrémité de signalisation de destination (TEP) un second message de demande égal au premier pour attribuer des ressources homologues à l'extrémité d'arrivée de la connexion.

6. Procédé selon la revendication précédente, **caractérisé en ce que** le point d'extrémité de signalisation de destination (TEP), à la réception du second message de demande, passe à occupé l'état des ressources homologues à l'extrémité d'arrivée de la connexion et les attribue à la connexion, dans le cas où elles ne sont pas encore attribuées.

7. Procédé selon la revendication précédente, **caractérisé en ce que** le point d'extrémité de signalisation de destination (TEP) transmet au point d'extrémité de signalisation d'origine (REP) un message de confirmation concernant l'attribution réussie des ressources homologues à l'extrémité d'arrivée de la connexion.

8. Procédé selon la revendication précédente, **caractérisé en ce que** le point d'extrémité de signalisation d'origine (REP), à la réception du dernier message de confirmation, passe à occupé l'état des ressources homologues à l'extrémité d'origine de la connexion.

9. Procédé selon l'une quelconque des revendications précédentes, **caractérisé en ce qu'**une ressource homologue demandée pour l'attribution comprend une voie identifiée par VPI, VCI et CID.

10. Procédé selon l'une quelconque des revendications précédentes, **caractérisé en ce que** ladite connexion ATM est établie sur les interfaces (lub, lur, lu(CS), lu(PS)) d'un réseau d'accès radio (UTRAN) d'un système de radiocommunication mobile de troisième génération (UMTS).
